# EUROPÄISCHE PATENTSCHRIFT

(11) **EP 4 269 066 B1**
(45) Veröffentlichungstag und Bekanntmachung des Hinweises auf die Patenterteilung: **11.09.2024**
(21) Anmeldenummer: 22208704.1
(22) Anmeldetag: 22.11.2022
(51) Int. Cl.: B29C 49/64, B29K 67/00, B29L 31/00, B29C 49/36

(54) **HEIZVERFAHREN UND HEIZVORRICHTUNG ZUR THERMISCHEN KONDITIONIERUNG VON VORFORMLINGEN, SOWIE BEHÄLTERHERSTELLUNGSMASCHINE FÜR DIE UMFORMUNG VON VORFORMLINGEN MIT EINER HEIZVORRICHTUNG**
HEATING METHOD AND HEATING APPARATUS FOR THERMAL CONDITIONING OF PREFORMS, AND CONTAINER MANUFACTURING MACHINE FOR FORMING PREFORMS WITH HEATING APPARATUS
PROCÉDÉ DE CHAUFFAGE ET DISPOSITIF DE CHAUFFAGE POUR LE CONDITIONNEMENT THERMIQUE DE PRÉFORMES, AINSI QUE MACHINE DE FABRICATION DE RÉCIPIENTS POUR LE FORMAGE DE PRÉFORMES AVEC UN DISPOSITIF DE CHAUFFAGE

(30) Priorität: 26.04.2022 DE 102022109966
(43) Veröffentlichungstag der Anmeldung: 01.11.2023
(73) Patentinhaber: KHS GmbH, 44143 Dortmund (DE)
(72) Erfinder: Linke, Michael, 22159 Hamburg (DE); Baumgarte, Rolf, 22926 Ahrensburg (DE); Lewin, Frank, 22889 Tangstedt (DE); Klatt, Dieter, 22147 Hamburg (DE); Wenig, Marcus, 23858 Reinfeld (DE); Firchau, Daniel, 23911 Schmilau (DE)
(74) Vertreter: Eisenführ Speiser

(56) Entgegenhaltungen:
- DE-A1- 102010 026 166
- US-A1- 2011 256 493
- US-A1- 2016 346 988
- US-A1- 2017 210 051
- US-A1- 2018 264 707

## Beschreibung

Die Erfindung betrifft ein Heizverfahren zur thermischen Konditionierung von Vorformlingen, die für eine Umformung vorgesehen sind, nach dem Oberbegriff des Anspruchs 1.

Die Erfindung betrifft weiterhin eine Heizvorrichtung zur thermischen Konditionierung von Vorformlingen, die für eine Umformung vorgesehen sind, nach dem Oberbegriff des Anspruchs 6 und eine Behälterherstellungsmaschine nach Anspruch 13 mit einer solchen Heizvorrichtung.

Generell geht es um das Temperieren von Vorformlingen, also um das Erwärmen der Vorformling auf eine Temperatur, die ein nachfolgendes Umformen erlaubt. Insbesondere geht es um das Gebiet des Preferential Heating, also um die ungleichmäßige Temperierung von Vorformlingen in deren Umfangsrichtung. Eine derartige ungleichmäßige Temperierung mit stärker erwärmten Umfangsbereichen und mit weniger stark erwärmten Umfangsbereichen wird beispielsweise angewendet, wenn aus den Vorformlingen Behälter hergestellt werden sollen, deren Querschnitt von einer kreisrunden Form abweicht. Die Abweichung kann beispielsweise darin bestehen, dass Behälter mit ovalem Querschnitt oder beispielsweise mit dreieckigem oder viereckigem Querschnitt produziert werden sollen.

Solche Temperierungen sind erforderlich, um Vorformlinge aus einem thermoplastischen Material auf einen nachfolgenden Umformvorgang vorzubereiten, nämlich das thermoplastische Vorformlingsmaterial auf eine Temperatur zu bringen, die eine Umformung erlaubt. Bekannt ist einerseits, dass diese Umformung unter Verwendung eines Blasgases erfolgt. Bekannt ist auch, dass eine simultane Umformung und Befüllung erfolgt, indem das Füllgut als flüssiges Umformfluid unter einem Umformdruck in den zuvor temperierten Vorformling eingeleitet wird. Bezüglich der Temperierung besteht kein grundsätzlicher Unterschied zwischen beiden Umformprozessen, sodass nachfolgend stellvertretend für alle Umformprozesse auf Blasprozesse abgestellt wird, d. h. auf die Verwendung eines Blasgases. Das Beschreiben von Blasprozessen dient der Erläuterung des technischen Hintergrundes der Erfindung, ohne dass darin aber eine Beschränkung der Allgemeinheit zu sehen ist, denn die Erfindung befasst sich mit der Temperierung der Vorformlinge und der Führung der Vorformlinge durch Heizvorrichtungen bzw. während der Temperierung, sodass es auf den sich daran anschließenden Umformvorgang bei der Erfindung nicht ankommt.

Bei einer Behälterformung z.B. durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizvorrichtung sowie eine Blaseinrichtung auf, in deren Bereich der zuvor temperierte Vorformling durch biaxiale Orientierung zu einem Behälter expandiert wird. Die Expansion erfolgt z.B. mit Hilfe von Druckluft, die in den zu expandierenden Vorformling eingeleitet wird. Der verfahrenstechnische Ablauf bei einer derartigen Expansion des Vorformlings wird z.B. in der DE 43 40 291 A erläutert.

Der grundsätzliche Aufbau einer Blasstation zur Behälterformung wird in der DE 42 12 583 A1 beschrieben. Möglichkeiten zur Temperierung der Vorformlinge werden z.B. in der DE 23 52 926 A1 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen. Eine Handhabung von Behältern unter Verwendung von Übergaberädern wird beispielsweise in der DE 199 06 438 A1 bei einer Anordnung des Übergaberades zwischen einem Blasrad und einer Ausgabestrecke beschrieben.

Im Hinblick auf die verwendeten Blasstationen sind unterschiedliche Ausführungsformen bekannt. Bei Blasstationen, die auf rotierenden Blasrädern angeordnet sind, ist eine buchartige Aufklappbarkeit der Formträger häufig anzutreffen. Es ist aber auch möglich, relativ zueinander verschiebliche oder andersartig geführte Formträger einzusetzen. Ungeachtet der konkreten Ausgestaltung der Blasstation erfolgt die Herstellung der Behälter aus den Vorformlingen dadurch, dass die Vorformlinge nach ihrer Temperaturkonditionierung den Blasstationen zugeführt und übergeben werden, dass die Vorformlinge dabei in eine geöffnete Form eingesetzt und die Form anschließend geschlossen wird. Durch Beaufschlagen des Vorformlings mit einem Umformmedium unter Druck wird dieser gegen die umgebende äußere Form expandiert, häufig unter Verwendung einer Reckstange, die in Längsrichtung des Vorformlings in diesen hineinfährt und ihn in Längsrichtung reckt und führt.

Die Herstellung der eingangs erwähnten unrunden Behälter wird z.B. bereits in der US 3,775,524 beschrieben. Es erfolgt zunächst eine homogene Grundtemperierung der Vorformlinge, anschließend wird die Temperatur in ausgewählten Bereichen selektiv erhöht. Weitere Varianten zur Herstellung von Temperaturprofilierungen in Umfangsrichtung des Vorformlings werden in der US 3,632,713, der US 3,950,459 sowie der US 3,892,830 beschrieben. Eine Temperaturkonditionierung durch selektive Abschattung wird in der DE 33 14 106 A1 angegeben. Die EP 2 428 347 A2 beschreibt eine selektive Temperaturprofilierung in Umfangsrichtung durch Berühren bestimmter Umfangsbereiche.

Aus der US 5,292,243 A ist es bekannt, gleichzeitig zwei Vorformlinge einer Temperaturkonditionierung in Umfangsrichtung zu unterziehen. In der EP 0 620 099 B1 und in der inhaltsgleichen DE 694 01 024 T2 findet sich eine Zusammenstellung von aus dem Stand der Technik bekannten Verfahren zur Temperaturkonditionierung von Vorformlingen.

Weiterhin ist im Stand der Technik bekannt, einen Vorformling zunächst in einem ersten Heizungsabschnitt einer Heizvorrichtung in Umfangsrichtung homogen, das heißt gleichmäßig zu erwärmen, und anschließend in einem zweiten Heizungsabschnitt in Umfangsrichtung das gewünschte Temperaturprofil zu erzeugen. Einen solchen Stand der Technik zeigt die WO 97/32713 A1 mit einem schrittweise arbeitenden Rotationsantrieb für die Vorformlinge. Die US 5,853,775 offenbart zwei Heizungsabschnitte mit einer ebenfalls schrittweise umlaufenden Transportkette mit einer Vielzahl von Vorformlingen tragenden Kettengliedern in Form von Transportdornen. In einer ersten Heizstation erfolgt zunächst eine homogene Erwärmung der Vorformlinge und in einer der ersten Station gegenüberliegenden zweiten Heizstation erfolgt eine in Umfangsrichtung ungleichmäßige Erwärmung der Vorformlinge. In beiden Heizstationen werden die Vorformlinge mittels einer nur der jeweiligen Heizstation zugeordneten Kette gedreht.

Die DE 10 2007 016 027 A1 lehrt eine Vorrichtung für das Preferential Heating, bei der eine Drehbewegung der Vorformlinge von einem Profilstrang erzeugt wird, der mit einem Zahnrad der Trageinrichtung zusammenwirkt, die den Vorformling durch die Heizstrecke trägt und die gemeinsam mit weiteren Trageinrichtungen zu einer umlaufenden Kette verbunden ist. Der Profilstrang läuft beabstandet von der Kette um die Heizstrecke um und kämmt mit dem Zahnrad der Trageinrichtung. Dabei wird der Profilstrang, nämlich ein Zahnriemen, mit konstanter oder variierender Umlaufgeschwindigkeit angetrieben.

Die Erzeugung eines Temperaturprofils in Umfangsrichtung macht erforderlich, dass die Drehung der Vorformlinge während der Temperierung in einer geführten Weise erfolgt. Hierzu wird in aller Regel so vorgegangen, dass die Vorformlinge von Haltemitteln gehalten und durch die Heizstrecke geführt werden und diese Haltemittel dann in ihrer Drehorientierung zwangsgeführt werden. Drehung des Haltemittels führt zu einer identischen Drehung des Vorformlings. Für eine in Umfangsrichtung gleichmäßige Temperierung wird dabei regelmäßig so vorgegangen, dass das Haltemittel kontinuierlich in Drehung versetzt wird. Hierzu kann das Haltemittel z.B. über ein Zahnrad verfügen, das an einem Profilstrang, z.B. einem Zahnriemen, entlanggeführt wird. Aufgrund einer Relativgeschwindigkeit zwischen Zahnrad und Profilstrang wird eine zwangsgeführte Drehung des Haltemittels induziert. Für die Erzeugung eines Temperaturprofils in Umfangsrichtung kann dann z.B. das Haltemittel drehfest in einer Drehposition gehalten sein, wie dies z.B. in der WO 2017/178102 A1 erläutert ist. Es ist dort ein erster Umlaufbereich der zu einer Kette verbundenen Trageinrichtungen gezeigt, in dem die Zahnräder der Haltemittel der Trageinrichtungen mit einem Zahnriemen kämmen, wodurch die an den Haltemitteln gehaltenen Vorformlinge in diesem Bereich gleichmäßig um ihre Längsachse rotieren. In einem anderen Bereich werden die Haltemittel in einer bestimmten Drehpositionierung festgehalten, mithin auch die davon gehaltenen Vorformlinge, sodass bestimmte Umfangsbereiche eine stärkere Temperierung erfahren. In der vorliegenden Anmeldung werden solche, die Drehposition bestimmende Einrichtungen als Führungsmittel bezeichnet. Die oben angesprochenen Profilstränge bzw. Zahnriemen sind ein Beispiel für solche Führungsmittel.

Die gewünschte Erzeugung z.B. ovaler Behälter macht erforderlich, dass die in Umfangsrichtung mit einem Temperaturprofil versehenen Vorformlinge in einer gewünschten Ausrichtung in die Umformstationen übergeben werden. Die auf einer höheren Temperatur befindlichen Bereiche müssen in einer bestimmten Richtung weisend in der umgebenden Form angeordnet werden, damit der entstehende ovale Behälter die gewünschte Wanddickenverteilung und die gewünschten Behältereigenschaften aufweist. Es sind daher im Stand der Technik unterschiedliche Verfahren und Vorrichtungen bekannt, um Vorformlinge nach ihrer Temperierung auszurichten und in dieser ausgerichteten Weise den nachfolgenden Umformstationen zu übergeben.

Die bereits angesprochene WO 2017/178102 A1 beschreibt z.B., dass hierzu das Haltemittel der Trageinrichtung über einen einstellbaren Winkel entlang eines Umlenkrades der Kette festgehalten wird. Weitere Alternativen werden dort ebenfalls genannt. Die EP 2 253 452 A1 offenbart unterschiedliche Verfahren und Vorrichtungen, um eine Ausrichtung temperaturkonditionierter Vorformlinge zu erreichen. Auch die WO 2016/180510 A1 beschäftigt sich mit der Ausrichtung eines temperaturkonditionierten Vorformlings, bevor dieser in eine Umformstation übergeben wird.

Die DE 197 57 818 A1 offenbart, dass Vorformlinge in Umfangsrichtung mit einem Temperaturprofil versehen werden. Dazu wird in einem ersten Bereich des Umlaufweges des Vorformlings durch eine Heizvorrichtung der Vorformling zu einer Rotationsbewegung angetrieben an Heizeinrichtungen entlanggeführt. In einem zweiten Bereich des Umlaufweges wird der Vorformling ohne eine solche Rotationsbewegung an Heizeinrichtungen entlanggeführt. Hierzu weist das Halteelement, das den Vorformling hält, einen Mitnehmer auf, der mit einer Steuerkurve zusammenwirkt, sodass der Vorformling ohne Rotationsbewegung geführt werden kann. Im ersten Bereich hingegen kämmt eine Verzahnung der kettenartig mit weiteren Trageinrichtungen verbundene Trageinrichtung mit einer Gegenverzahnung, sodass der Vorformling in eine Drehbewegung versetzt wird.

Vorformlinge sind typischerweise von einer zylindrischen Grundstruktur mit einem geschlossenen Bodenbereich an ihrem einen Ende und mit einem geöffneten Mündungsabschnitt am entgegengesetzten Ende. Im Bereich des Mündungsabschnittes ist regelmäßig ein Außengewinde sowie ein Stützring ausgeformt. Dieser Abschnitt nimmt nicht an der Umformung teil, sondern ist nach der Umformung des Vorformlings z.B. in einen Behälter unverändert vorhanden. Es ist bekannt, dass der Mündungsbereich bei der Temperaturkonditionierung der Vorformlinge gegen Erwärmung abgeschirmt wird, indem z.B. Strahlungsblenden vorgesehen werden, um Heizstrahlung daran zu hindern, auf den Mündungsabschnitt aufzutreffen. Es ist auch bekannt, den Mündungsabschnitt gezielt mit einem Kühlmittel zu beaufschlagen, um einertrotz vorhandener Abschirmmaßnahmen eintretende Erwärmung des Mündungsabschnittes entgegenzuwirken. Ziel der Abschirm- und Kühlmaßnahmen ist, dass der Mündungsbereich zuverlässig unterhalb einer kritischen Temperatur bleibt, ab der eine Verformung des Mündungsbereiches z.B. während des Einführens des Umformmediums unter Druck eintreten kann.

Die bisher bekannten Verfahren und Vorrichtungen zur gezielten Kühlung des Mündungsbereiches von Vorformlingen während der Temperierung blasen in der Regel Kühlluft seitlich auf den Mündungsabschnitt. Diese bekannten Verfahren und Vorrichtungen sind allerdings noch nicht für alle Anwendungen gut geeignet, insbesondere im Bereich des Preferential Heating ergeben sich ungelöste Probleme.

Es ist daher die Aufgabe der vorliegenden Erfindung, Heizverfahren und Heizvorrichtungen aufzuzeigen, die die gezielte Kühlung des Mündungsbereichs von Vorformlingen verbessern.

Die Lösung dieser Aufgabe gelingt mit einem Heizverfahren nach Anspruch 1. Erfindungsgemäß werden die Vorformlinge in einer Förderrichtung durch eine Heizvorrichtung geführt. Es wurden in der Beschreibungseinleitung Beispiele und Dokumente aus dem Stand der Technik genannt, wie diese Führung erfolgen kann. In der Heizvorrichtung werden mehrere Heizeinrichtungen entlang einer Heizstrecke stationär und in der Förderrichtung hintereinanderliegend angeordnet. Solche Heizeinrichtungen sind z.B. als Heizkästen bekannt. In aller Regel weisen solche Heizkästen mehrere übereinander angeordnete, elektrisch betriebene NIR-Strahler auf, denen gegenüberliegend Reflektoren angeordnet sind. Die Vorformlinge werden dabei zwischen Strahlern und Reflektor entlanggeführt. Um eine in Umfangsrichtung gleichmäßige Temperierung zu erreichen, werden die Vorformlinge während der Führung entlang der Heizstrecke und damit entlang der Heizeinrichtungen wenigstens zeitweise um ihre eigene Längsachse gedreht. Diese Drehung kann z.B. schrittweise erfolgen, bevorzugt ist aber eine kontinuierliche Drehung. Es wurden in der Beschreibungseinleitung Beispiele und Dokumente aus dem Stand der Technik genannt, wie diese Drehung erfolgen kann. Der Mündungsbereich der Vorformlinge wird während der Führung entlang der Heizstrecke wenigstens zeitweise gerichtet mit einem Kühlmedium beaufschlagt.

Der Mündungsbereich erstreckt sich vom oberen, offenen Ende des Vorformlings bis hin zu dem Handhabungsring des Vorformlings, auch als Trag- oder Neckring bezeichnet, der für die Handhabung des Vorformlings vorgesehen ist, z.B. für den Angriff von Zangen. Der Mündungsbereich ist auch dadurch definiert, dass er in unveränderter Form am fertigen Behälter vorzufinden ist. Das gerichtete Beaufschlagen dieses Mündungsbereichs meint, dass nicht unterschiedslos der gesamte Vorformling mit dem Kühlmedium beaufschlagt wird, und somit unter anderem auch der Mündungsbereich, sondern vielmehr soll gezielt und gerichtet auf den Mündungsbereich das Kühlmedium abgegeben werden, z.B. durch entsprechend angeordnete und ausgerichtete Düsen oder Längsschlitze.

Erfindungsgemäß wird der Mündungsbereich aus zumindest zwei unterschiedlichen Richtungen mit dem Kühlmedium beaufschlagt. Der Begriff der "Richtung" bezieht sich dabei auf den Vorformling. Vom Vorformling aus betrachtet erfolgt also die Beaufschlagung aus zwei unterschiedlichen Umfangsrichtungen.

Bei Beaufschlagung aus zwei unterschiedlichen Richtungen erfolgt die Beaufschlagung bevorzugt um 180° umfangsversetzt, also aus entgegengesetzten Richtungen. Bei mehr als zwei unterschiedlichen Richtungen erweist sich eine gleichmäßige Umfangsverteilung als vorteilhaft.

Der Vorteil der beschriebenen Lösung besteht darin, dass durch die Beaufschlagung aus mehr als einer Richtung eine gleichmäßigere Kühlung des Mündungsbereichs möglich ist, ohne dass es entscheidend auf eine gleichmäßige Drehung des Vorformlings ankommt.

Das beschriebene Verfahren erweist sich als besonders vorteilhaft, wenn die Vorformlinge zur Erzeugung eines Temperaturprofils in Umfangsrichtung (Preferential Heating) während der Führung entlang der Heizstrecke und damit entlang der Heizeinrichtungen wenigstens zeitweise nicht um ihre eigene Längsachse gedreht, sondern drehfest geführt werden, wobei erfindungsgemäß während dieser drehfesten Führung, bevorzugt ausschließlich während dieser drehfesten Führung, die wenigstens zeitweise Beaufschlagung des Mündungsbereichs aus zumindest zwei unterschiedlichen Richtungen mit dem Kühlmedium erfolgt. Die drehfeste Führung kann z.B. dadurch realisiert sein, dass der Vorformling oder die den Vorformling führende Trageinrichtung in ihrer Drehposition aktiv festgehalten ist. Möglich ist auch, dass die drehfeste Führung dadurch realisiert ist, dass keine aktive Drehung mehr erfolgt. Bevorzugt ist ein aktives Festhalten, weil dadurch die Drehfestigkeit reproduzierbar gewährleistet ist.

Die Beaufschlagung aus unterschiedlichen Richtungen kann z.B. zeitgleich erfolgen. Sie kann für den drehfest geführten Vorformling aber auch zeitversetzt erfolgen, nämlich aus einer ersten Richtung an einer ersten Position der Heizstrecke, die dem Preferential Heating dient, und aus einer anderen Richtung, z.B. aus einer entgegengesetzten Richtung, an einer anderen Position der Heizstrecke innerhalb der Heizeinrichtung, die dem Preferential Heating dient. Der Mündungsbereich der Vorformlinge kann z.B. während der drehfesten Führung entlang der Heizstrecke alternierend aus einer ersten und aus einer zweiten Richtung beaufschlagt werden.

Weitere vorteilhafte Ausführungsformen sind in den Unteransprüchen angegeben.

Bei den vorstehend genannten Ausführungsvarianten ist jeweils bevorzugt, dass die Richtungen, aus denen die Beaufschlagung mit dem Kühlmedium erfolgt, senkrecht zur Förderrichtung liegen, und die Strömungsrichtung des Kühlmediums im Wesentlichen in horizontaler Richtung verläuft, um möglichst nicht Bereiche unterhalb des Handhabungsringes zu überstreichen. Es ist auch bevorzugt, dass das Kühlmedium im Wesentlichen auf der Höhe des Mündungsbereiches strömt, da dies einerseits einen effektiven Energieeinsatz verspricht, und andererseits eine möglichst geringe Störung der Temperierung der übrigen Bereiche der Vorformlinge darstellt, nämlich des Bereiches unterhalb des Handhabungsrings. Entsprechend wären Kühldüsen oder Kühlschlitze anzuordnen, auszurichten und zu dimensionieren.

Technisch vorteilhaft ist bei allen diesen und bei allen nachfolgenden Ausführungsformen die Kühlvorrichtung, die den Mündungsbereich mit einem Kühlmedium beaufschlagt, stationär angeordnet. Die Vorformlinge werden in einem solchen Fall also entlang der Kühlvorrichtung geführt. Die Kühlvorrichtung kann z.B. baulich integriert zusammen mit der Heizeinrichtung ausgebildet sein, die z.B. als Heizkasten ausgeführt sein kann.

Mit Vorteil ist vorgesehen, dass die Kühlleistung resultierend aus der Beaufschlagung mit dem Kühlmedium für wenigstens zwei Richtungen unterschiedlich einstellbar ausgeführt wird. Damit ist gemeint, dass die Kühlleistung z.B. aus Richtung 1 anders eingestellt werden kann als die Kühlleistung aus Richtung 2. Beide Kühlleistungen könnten z.B. unabhängig voneinander einstellbar sein und dabei beliebige Werte einnehmen, insbesondere voneinander abweichende Werte. Die Einstellung der Kühlleistung kann dabei z.B. dadurch erfolgen, dass die Temperatur des Kühlmediums verändert wird oder z.B. die pro Zeiteinheit strömende Menge an Kühlmedium oder beides.

Als besonders bevorzugte Ausführungsform einer einstellbaren Kühlleistung wird angesehen, dass die Kühlleistung gesteuert oder geregelt wird. Besonders bevorzugt ist, dass diese Steuerung oder Regelung in Abhängigkeit von wenigstens einer gemessenen Mündungstemperatur erfolgt. Eine Mündungstemperatur kann z.B. von einem Pyrometer oder von einer Thermografiekamera oder anderen geeigneten Messeinrichtungen erfasst werden.

Weiter bevorzugt und in weiterer Ausbildung der vorstehenden Erfindungsgedanken kann die Steuerung oder Regelung in Abhängigkeit von wenigstens zwei gemessenen Mündungstemperaturen erfolgen, die umfangsverteilt am Mündungsbereich erfasst werden, z.B. auf gegenüberliegenden Seiten der Mündung. Besonders bevorzugt erfolgt pro Richtung, aus der eine Beaufschlagung mit einem Kühlmedium erfolgt, eine Messung. Dadurch können mit Vorteil mehrere Steuer- oder Regelkreise ausgebildet werden, in denen jeweils und einander zugeordnet eine Temperaturmessung erfolgt bzw. eine Einrichtung vorgesehen ist, die diese Temperaturmessung ausführt, eine Steuer- oder Regelvorrichtung vorgesehen ist, und eine Kühleinrichtung, die den Bereich der Mündung beaufschlagt, an dem die Temperaturmessung erfolgt. Die Steuer- oder Regelvorrichtung erhält Temperaturwerte und steuert oder regelt die zugeordnete Kühleinrichtung so, dass der Unterschied zwischen den erfassten Temperaturwerten und einem Sollwert verringert wird. Es liegt dabei im fachmännischen Ermessen, ob eine Steuerung oder eine Regelung realisiert werden soll und entsprechend entweder ein Steuer- oder ein Regelkreis bzw. entweder eine Steuervorrichtung oder eine Regelvorrichtung vorgesehen wird.

Technisch vorteilhaft ist, dass bei allen vorstehend beschriebenen und bei allen nachfolgenden Ausführungsformen Luft als Kühlmedium verwendet wird, weiter bevorzugt Sterilluft, die z.B. durch Filter, z.B. HEPA-Filter angesaugt wird, z.B. weil als Kühlvorrichtung ein Kühllüfter eingesetzt wird.

Für alle Ausführungsvarianten ist bevorzugt, dass das Kühlmedium temperiert wird, z.B. abgekühlt oder erwärmt.

Die Lösung der gestellten Aufgabe gelingt auch mit einer Heizvorrichtung mit den Merkmalen des Anspruchs 6. Weitere vorteilhafte Ausführungsformen der Heizvorrichtung sind in den Unteransprüchen angegeben, deren Vorteile sich teilweise bereits aus den analogen und schon besprochenen vorteilhaften Ausführungsformen des Verfahrens ergeben.

Analog zum vorstehend beschriebenen Verfahren, zeichnet sich die erfindungsgemäße Heizvorrichtung für die thermische Konditionierung von Vorformlingen dadurch aus, dass sie mehrere Trageinrichtungen für Vorformlinge aufweist, die miteinander verbunden sind zur Ausbildung einer Endlostransportkette. Die Endlostransportkette ist antreibbar zu einem kontinuierlichen Umlauf innerhalb der Heizvorrichtung in Förderrichtung entlang einer Umlaufstrecke, die die Heizstrecke umfasst. Beim Durchlaufen der Heizstrecke werden die Vorformlinge entlang der Heizeinrichtungen geführt, wobei jede Trageinrichtung ein Haltemittel für einen Vorformling aufweist. Für ein Drehen des Vorformlings ist das Haltemittel, z.B. ein Klemmdorn, drehbar in der Trageinrichtung angeordnet. Zum Zwecke einer solchen Drehung greifen Führungsmittel der Heizvorrichtung, z.B. ein Zahnriemen, an den Haltemitteln an, wie dies in der Beschreibungseinleitung anhand von Beispielen und Dokumenten aus dem Stand der Technik erläutert wurde. Wenigstens auf einer Teilstrecke der Heizstrecke sind die Haltemittel zu einer gleichförmigen Drehung um ihre Längsachse geführt sind. Auf dieser Teilstrecke werden die Vorformlinge in ihrer Umfangsrichtung gleichmäßig temperiert. Auf einer anderen Teilstrecke der Heizstrecke werden die Haltemittel drehfest gehalten. Auch dazu wurden in der Beschreibungseinleitung Beispiele und Dokumente zum Stand der Technik genannt. Auf dieser anderen Teilstrecke werden die Vorformlinge in ihrer Umfangsrichtung ungleichmäßig temperiert (Preferential Heating). Die Heizvorrichtung weist eine Kühlvorrichtung auf, die den Mündungsbereich der Vorformlinge während der Führung entlang der Heizstrecke wenigstens zeitweise gerichtet mit einem Kühlmedium beaufschlagt. Erfindungsgemäß weist die Kühlvorrichtung wenigstens zwei Kühleinrichtungen auf, die jeweils gerichtet den Mündungsbereich der Vorformlinge aus einer jeweiligen Richtung mit dem Kühlmedium beaufschlagen, wobei die jeweiligen Richtungen der Kühleinrichtungen verschieden sind, so dass der Mündungsbereich aus unterschiedlichen Richtungen mit dem Kühlmedium beaufschlagt wird. Wie auch schon zum Verfahren erläutert, sind dabei bevorzugt die Richtungen senkrecht zur Fördererrichtung ausgerichtet. Auch die weiteren Erläuterungen zum Verfahren sind auf die Vorrichtung übertragbar.

Erfindungsgemäß sind die Kühleinrichtungen an der Teilstrecke der Heizstrecke angeordnet, an dem die Haltemittel drehfest gehalten sind. An anderen Teilstrecken können andere Kühlvorrichtungen angeordnet sein, aber auch baugleiche.

Mit Vorteil wird vorgeschlagen, dass die Heizvorrichtung eine Regel- oder eine Steuervorrichtung aufweist, an die wenigstens eine der Kühleinrichtungen angeschlossen ist. Die Kühleinrichtung, sollten mehrere angeschlossen sein die mehreren, wird von der Regel- oder Steuervorrichtung in ihrer Kühlleistung, welche aus der Beaufschlagung mit dem Kühlmedium resultiert, unabhängig von den anderen Kühleinrichtungen in der Kühlleistung eingestellt. Dadurch lassen sich unterschiedliche Bereiche der Mündung der Vorformlinge unterschiedlich stark kühlen. Es liegt dabei im fachmännischen Ermessen, ob eine Steuerung oder eine Regelung realisiert werden soll und entsprechend entweder ein Steuer- oder ein Regelkreis bzw. entweder eine Steuervorrichtung oder eine Regelvorrichtung vorgesehen wird.

In weiterer Ausgestaltung dieses Erfindungsgedankens ist die Regel- oder Steuervorrichtung mit einer Sensoreinrichtung, z.B. einem Pyrometer ausgestattet. Die Sensoreinrichtung soll wenigstens eine Mündungstemperatur erfassen und ist entsprechend ausgebildet und angeordnet. Die Regel- oder Steuervorrichtung bildet mit der Sensoreinrichtung und der Kühleinrichtung einen Steuer- oder einen Regelkreis aus, mit dem die Kühlleistung einstellbar ist anhand der Mündungstemperatur. Auf diese Weise kann selbsttätig gesteuert oder selbsttätig geregelt die Kühlleistung eingestellt werden, ohne dass ein Eingriff einer Bedienperson erforderlich ist.

In weiter bevorzugter Ausgestaltung dieses Erfindungsgedankens sind mehrere, insbesondere alle der wenigstens zwei Kühleinrichtungen an die Regel- oder Steuervorrichtung angeschlossen. Jede der Kühleinrichtungen ist in ihrer Kühlleistung einstellbar. Bevorzugt lassen sich mehrere Regel- und Steuerkreise realisieren, wenn die Regel- oder Steuervorrichtung eine Sensoreinrichtung aufweist, die mehrere Sensoren zur Erfassung mehrerer umfangsverteilter Mündungstemperaturen besitzt. Jeder Sensor erfasst eine der mehreren Temperaturen, und jede Kühleinrichtung kann mit der Regel- und Steuervorrichtung und jeweils einem zugeordneten Sensor einen Steuer- oder einen Regelkreis ausbilden, mit dem die jeweilige Kühlleistung einstellbar ist anhand der zugeordneten Mündungstemperatur.

Eine technisch einfache Realisierung der Erfindung ist möglich, wenn die Kühleinrichtungen als Kühllüfter ausgeführt sind, die bevorzugt Filter für das Ansaugen von Sterilluft aufweisen.

Schließlich wird die Aufgabe von einer erfindungsgemäßen Behälterherstellungsmaschine gelöst.

In Verbindung mit den nachfolgenden Figuren soll die Erfindung näher erläutert werden anhand von Ausführungsbeispielen. Es zeigen:
- Fig. 1: eine Skizze zur Veranschaulichung eines grundsätzlichen Aufbaus einer Vorrichtung zur Blasformung von Behältern,
- Fig. 2: einen Vorformling in einem Längsschnitt,
- Fig. 3: einen Querschnitt durch eine Anordnung eines Vorformlings im Bereich einer Heizeinrichtung,
- Fig. 4: eine schematische Ansicht, die einen temperierten Vorformling zeigt,
- Fig. 5: ein Beispiel für eine Trageinrichtung mit Haltemittel mit einem davon gehaltenen Vorformling in zwei unterschiedlichen Ansichten,
- Fig. 6a, 6b: Beispiele für Heizeinrichtungen eines Ausführungsbeispiels und
- Fig. 7: eine schematische Ansicht für ein Ausführungsbeispiel einer Kühlvorrichtung.

Nachfolgend wird zunächst der grundsätzliche Aufbau einer Maschine zur Umformung von Vorformlingen (1) in Behälter erläutert, z.B. in Flaschen, wobei dies am Beispiel einer Blasmaschine erfolgt. Der grundsätzliche Aufbau bliebe aber unverändert, wenn die Umformung der Vorformlinge (1) in Behälter nicht durch Blasluft erfolgte, sondern eine simultane Umformung und Befüllung mit Füllgut erfolgen würde. Insbesondere die Heizvorrichtung (H) mit der Umlaufstrecke (20) bedürfte hierfür keiner Änderungen, denn unabhängig vom verwendeten Umformmedium ist der Vorformling (1) auf die erforderliche Umformtemperatur zu erwärmen, also einer Temperaturkonditionierung zu unterwerfen, und ist dem Vorformling (1) ein geeignetes Temperaturprofil aufzuprägen.

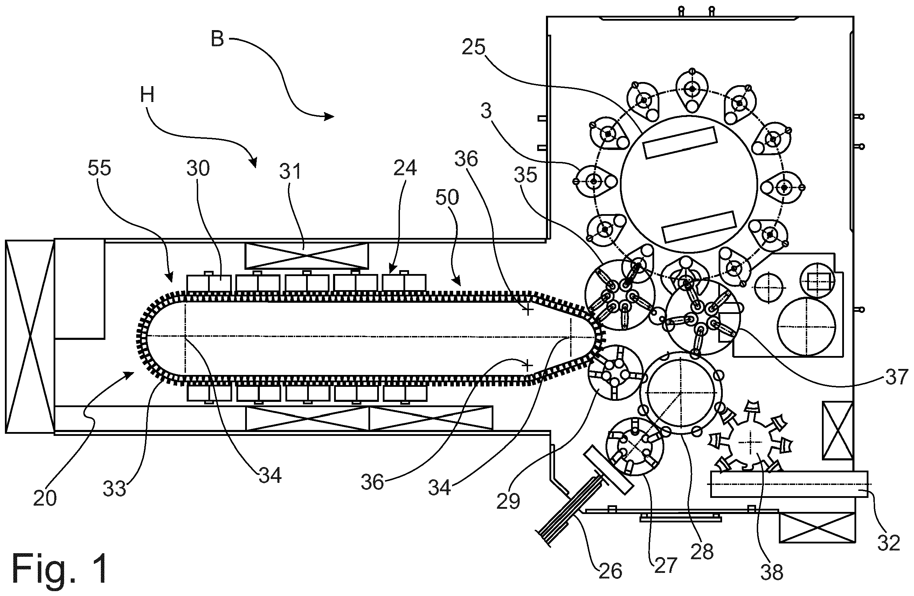

Fig. 1 zeigt zum allgemeinen Verständnis des technischen Umfeldes der Erfindung den grundsätzlichen Aufbau einer Blasmaschine (B), die mit einer Heizvorrichtung (H) mit einer Umlaufstrecke (20) sowie mit einem rotierenden Blasrad (25) versehen ist. Ausgehend von einer Vorformlingseingabe (26) werden die Vorformlinge (1) von Übergaberädern (27, 28, 29) in die Heizvorrichtung (H) und in den Bereich der Umlaufstrecke (20) transportiert. In einem Übergabebereich erfolgt eine Übergabe der Vorformlinge (1) von einem Übergaberad (29) auf eine Transporteinrichtung (33). Entlang der Umlaufstrecke (20) sind Heizeinrichtungen (30) sowie Gebläse (31) angeordnet, um die Vorformlinge (1) zu temperieren. Der Teil der Umlaufstrecke (20), der entlang der Heizeinrichtungen (30) führt, wird in der vorliegenden Anmeldung als Heizstrecke (24) bezeichnet. Nach einer ausreichenden Temperierung der Vorformlinge (1) werden diese an das Blasrad (25) übergeben, in dessen Bereich Blasstationen (3) angeordnet sind. Für die Übergabe an das Blasrad (25) entnimmt ein Transferrad (35) die Vorformlinge in einem Entnahmebereich von den Transporteinrichtungen (33). Die fertig geblasenen Behälter werden von weiteren Übergaberädern einer Ausgabestrecke (32) zugeführt.

Um einen Vorformling (1) derart in einen Behälter umformen zu können, dass der Behälter Materialeigenschaften aufweist, die eine lange Verwendungsfähigkeit von innerhalb des Behälters abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden. Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt im gewählten Beispiel durch Druckluftzuführung. Die Druckluftzuführung ist z.B. in eine Vorblasphase, in der Gas, zum Beispiel Pressluft, mit einem niedrigen Druckniveau zugeführt wird, und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 1 ist ebenfalls erkennbar, dass bei der dargestellten Ausführungsform die Umlaufstrecke (20) aus einer Vielzahl umlaufender Transporteinrichtungen (33) ausgebildet ist, die kettenartig aneinandergereiht und entlang von Umlenkrädern (34) geführt sind. Insbesondere ist daran gedacht, durch die kettenartige Anordnung eine im Wesentlichen rechteckförmige Grundkontur aufzuspannen. Bei der dargestellten Ausführungsform werden im Bereich der dem Zuführrad (29) und einem Entnahmerad (35) zugewandten Ausdehnung der Umlaufstrecke (20) ein einzelnes relativ groß dimensioniertes Umlenkrad (34), das Kopfrad, und im Bereich von benachbarten Umlenkungen zwei vergleichsweise kleiner dimensionierte Umlenkräder (36) verwendet. Grundsätzlich sind aber auch beliebige andere Umlaufstreckenkonturen denkbar.

Zur Ermöglichung einer möglichst dichten Anordnung des Zuführrades (29) und des Entnahmerades (35) relativ zueinander erweist sich die dargestellte Anordnung als besonders zweckmäßig, da im Bereich der entsprechenden Ausdehnung der Umlaufstrecke (20) drei Umlenkräder (34, 36) positioniert sind, und zwar jeweils die kleineren Umlenkräder (36) im Bereich der Überleitung zu den linearen Umlaufabschnitten der Umlaufstrecke (24) und das größere Umlenkrad (34, Kopfrad) im unmittelbaren Übergabebereich zum Zuführrad (29) und zum Entnahmerad (35).

Die kettenartig verbundenen Trageinrichtungen (33) laufen um die beschriebenen Umlenkräder (34, 36) und entlang der Umlaufstrecke (20) um. Hierzu kann beispielsweise eines der Umlenkräder, z.B. das Kopfrad (34), oder mehrere der Umlenkräder drehangetrieben ausgeführt sein, z.B. indem ein Motor das Kopfrad (34) antreibt, oder z.B. indem eine mechanische Kopplung an die Drehung des Blasrades (25) erfolgt, welches z.B. über einen Drehantrieb verfügen kann. Das Zuführrad (29) übergibt Vorformlinge (1) auf Trageinrichtungen (33), die in einem Zuführbereich der Umlaufstrecke vorformlingslos ankommen. Von diesem Zuführbereich führen die nunmehr mit einem Vorformling (1) versehenen Trageinrichtungen (33) den Vorformling (1) im Uhrzeigersinn entlang der Umlaufstrecke (20) zunächst in Richtung auf das entfernte Umlenkrad (34), dann um dieses Umlenkrad (34) herum und dann zurück in Richtung auf das Entnahmerad (35). Sobald eine Trageinrichtung (33) mit einem Vorformling (1) in den Entnahmebereich der Umlaufstrecke (20) gelangt, wird der Vorformling (1), der zu diesem Zeitpunkt seine für die Umformung erforderliche Erwärmung erfahren hat, von der Trageinrichtung (33) entfernt bzw. auf das Entnahmerad (35) übergeben und von diesem drehend weitergeführt hin zum Blasrad (25). Die nach diesem Entnahmevorgang vorformlingslose Trageinrichtung (33) läuft entlang der Umlaufstrecke (20) nunmehr vom Entnahmebereich zum Zuführbereich, um dort erneut einen Vorformling (1) aufzunehmen.

Die dargestellten Zuführ- und Entnahmeräder (29) bzw. (35) können z.B. zangenartige Zuführ- bzw. Entnahmemittel aufweisen. Da diese gemeinsam als Transferräder zu bezeichnenden Räder für die vorliegende Erfindung nicht bedeutsam sind, wird auf eine weitere Beschreibung verzichtet. Auch das Blasrad (25) bedarf aus dem gleichen Grund keiner detaillierten Beschreibung. Diese Räder können wie im Stand der Technik in unterschiedlichster Art und Weise bekannt ausgeführt sein.

Nach einem fertigen Blasen der Behälter werden diese von einem Entnahmerad (37) aus dem Bereich der Blasstationen (3) herausgeführt und über das Übergaberad (28) und ein Ausgaberad (38) zur Ausgabestrecke (32) transportiert.

Die in Figur 1 dargestellte Heizstrecke (24) kann z.B. durch das Vorsehen einer größeren Anzahl von Heizeinrichtungen (30) modifiziert werden, um z.B. eine größere Menge von Vorformlingen (1) je Zeiteinheit temperieren zu können. Die vorstehend geschilderten Heizeinrichtungen (30) sind als Heizkästen ausgeführt, in denen NIR-Strahler angeordnet sind. Dies ist lediglich als Beispiel für verwendbare Heizeinrichtungen zu verstehen. Es sind im Stand der Technik eine Vielzahl von Konstruktionen bekannt, die der Temperaturkonditionierung von Vorformlingen dienen und insoweit als Heizeinrichtungen zu bezeichnen sind. Es sind im Stand der Technik auch andere Heizverfahren als Bestrahlung mit IR- oder NIR-Strahlung bekannt, z.B. Beheizung der Vorformlinge durch Mikrowellenbestrahlung. Die Erfindung ist unabhängig vom konkreten Aussehen der Heizeinrichtungen (30) und auch vom konkreten Aussehen der Heizstrecke (24) und der Umlaufstrecke (20).

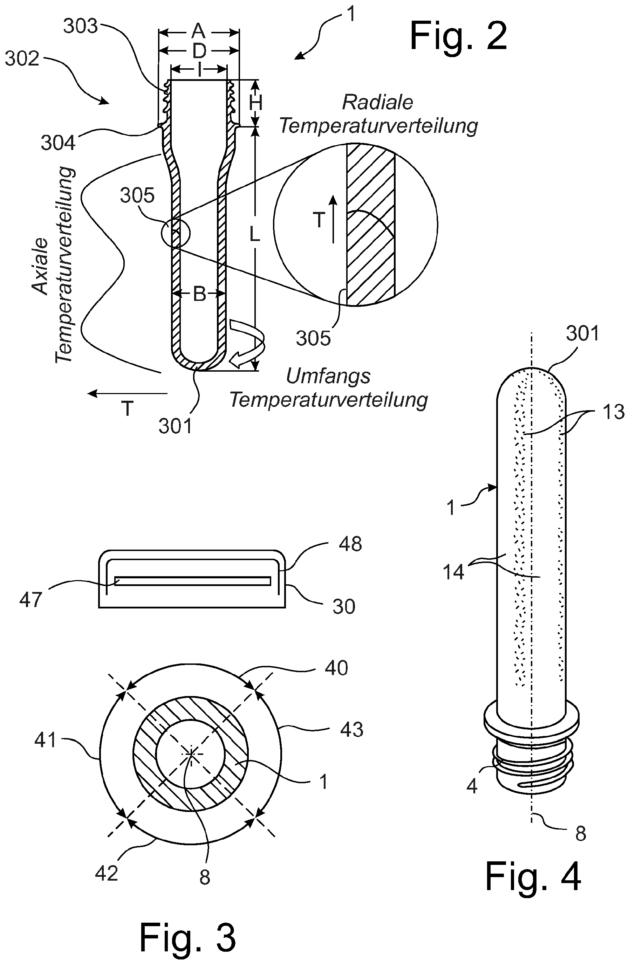

Figur 2 zeigt in einer Schnittansicht einen typischen Vorformling (1) mit einem geschlossenen Bodenbereich (301) und einem offenen Mündungsabschnitt bzw. Mündungsbereich (302). Im Bereich des Mündungsabschnittes (302) ist ein Außengewinde (303) sowie ein Handhabungsring (304) ausgeformt. Nach erfolgter Temperaturkonditionierung ergibt sich in dem Vorformling (1) eine bestimmte Temperaturverteilung. So kann zum Beispiel durch eine entsprechende Beheizung in axialer Richtung des Vorformlings (1) ein Temperaturprofil erzeugt werden, wie dies linksseitig des Vorformlings (1) dargestellt ist. Es ist dort zu erkennen, dass im Bodenbereich (301) und in einem Bereich unterhalb des Handhabungsringes (304) eine höhere Temperatur realisiert ist als in einem dazwischenliegenden Bereich. Es ist aber auch möglich, den Vorformling (1) in axialer Richtung homogen aufzuheizen.

Aus dem vergrößerten Abschnitt des Wandbereiches (305) ist ersichtlich, dass auch innerhalb der Vorformlingswand ein Temperaturverlauf einstellbar ist. Dies ist unter anderem dadurch bedingt, dass die Absorption der Heizstrahlung radial außen zu einer stärkeren Erwärmung führt, als radial innen. Temperaturunterschiede in der Vorformlingswand heben sich zwar mit der Zeit durch thermische Ausgleichsprozesse auf. Diese Temperaturausgleichsprozesse sind allerdings in den typischerweise aus PET bestehenden Vorformlingen relativ langsam.

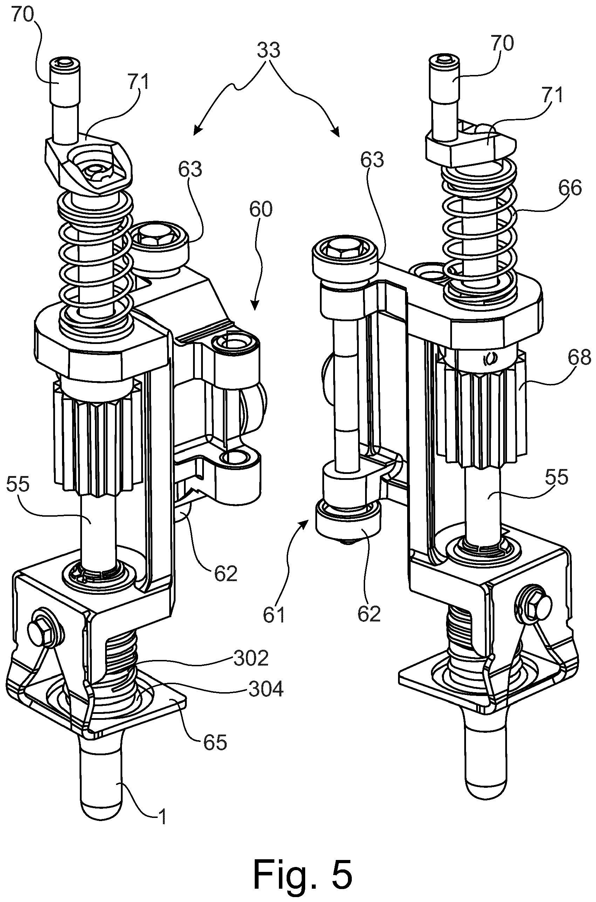

Der nach oben offene Mündungsabschnitt (302), auch als Mündungsbereich bezeichnet, hat bereits die endgültige Form und soll an der Umformung nicht teilnehmen. Aus diesem Grunde wird bei der Temperaturkonditionierung der Mündungsbereich (302) nach Möglichkeit nicht mit Heizstrahlung beaufschlagt. Hierzu werden z.B. Abschirmungen (65) vorgesehen, siehe z.B. Fig. 5. Häufig ist auch eine Kühlung des Mündungsbereiches vorgesehen, da eine Miterwärmung auch des Mündungsbereiches (302) nicht zuverlässig und nicht gänzlich verhindert werden kann, insbesondere eine Miterwärmung des Handhabungsrings (304), der an der Grenze zu dem Bereich des Vorformlings (1) liegt, der zu temperieren und umzuformen ist. Die Miterwärmung resultiert z.B. einerseits aus aufsteigender Wärme, andererseits aber auch aus Wärmestrahlung, die auf den Handhabungsring (304) und darüber liegende Bereiche trifft, z.B. nach Reflexion an Elementen der Heizvorrichtung (H) oder z.B. weil erwärmte Elemente der Heizvorrichtung zu Sekundärstrahlern werden und Wärmestrahlung emittieren.

Zusätzlich kann der Vorformling (1) in seiner Umfangsrichtung mit einem Temperaturprofil versehen werden. Fachüblich wird dann von "Preferential Heating" gesprochen. Dies ist zum Beispiel bekannt für Vorformlinge (1), die nach ihrer Temperaturkonditionierung in nicht-kreisrunde Behälter umgeformt werden sollen, zum Beispiel in ovale Behälter.

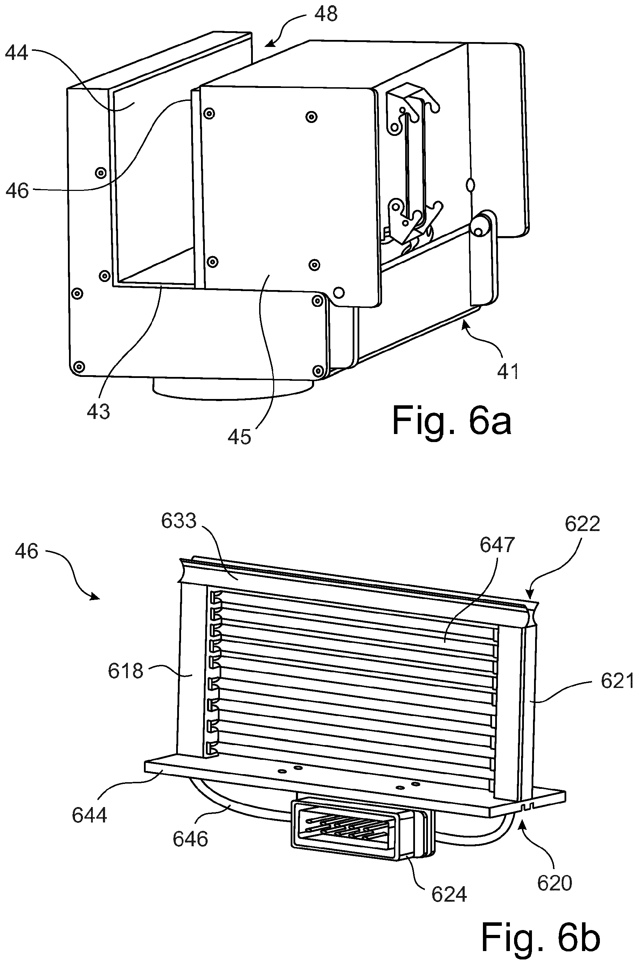

Fig. 3 zeigt einen Horizontalschnitt durch einen Vorformling (1), der im Bereich einer beispielhaft gezeigten Heizeinrichtung (30) angeordnet ist. In der Praxis wird der Vorformling (1) an einer solchen Heizeinrichtung (30) entlanggeführt, d. h. die Heizeinrichtung (30) ist stationär angeordnet und der Vorformling (1) bewegt sich relativ zu der Heizeinrichtung (30). Es ist erkennbar, daß die Heizeinrichtung (30) einen Heizstrahler (47) sowie einen Reflektor (48) aufweist. In der Regel weist die Heizeinrichtung mehrere übereinander angeordnete Heizstrahler (47) auf, siehe Figur 6b, um über die gesamte axiale Erstreckung des Vorformlings (1) ausreichend Strahlungsintensität bereitzustellen und um ggf. eine gewünschte axiale Temperaturverteilung zu erzeugen. Der Umfang des Vorformlings (1) ist bei der dargestellten Ausführungsform in vier Winkelbereiche (40,41,42,43) unterteilt. In Richtung des Umfanges soll die Temperierung der Winkelbereiche (40) unterschiedlich erfolgen ("Preferential Heating"). Zur Herstellung eines Behälters (2) mit einer ovalen Kontur ist es beispielsweise zweckmäßig, jeweils die Winkelbereiche (40,42) sowie die Winkelbereiche (41,43) zumindest annähernd gleich zu temperieren. Insbesondere ist vorgesehen, die Winkelbereiche (40,42) mit einer höheren Temperatur als die Winkelbereiche (41,43) zu versehen, wenn ein ovaler Behälter (2) hergestellt werden soll. Die Größe der jeweiligen Winkelbereiche (40,41,42,43) hängt von der Gestaltung des Behälters (2) ab.

Zur Realisierung des Temperaturprofils in Richtung des Umfanges ist es beispielsweise möglich, eine Rotation des Vorformlings (1) um die Längsachse (8) durchzuführen. Bei einer Temperaturprofilierung in Umfangsrichtung mit vier Winkelbereichen (40,41,42,43) kann die Bewegung derart erfolgen, daß z.B. die sich gegenüberliegenden Winkelbereiche (40) und (42) insgesamt länger Heizstrahlern (47) zugewandt sind und dadurch stärker mit Heizstrahlung beaufschlagt werden, als die Winkelbereiche (41) und (43).

Beispielsweise ist es möglich, den Vorformling (1) zunächst vorab gleichmäßig zu temperieren, z.B. auf der in Figur 1 gezeigten Wegstrecke vom Zuführrad (29) bis zum entfernten Umlenkrad (34). In diesem Bereich können die Vorformlinge (1) z.B. kontinuierlich drehend an den dargestellten fünf Heizkästen (30) entlanggeführt werden. Dies ist im Stand der Technik bekannt und entsprechende Dreheinrichtungen sind ebenfalls im Stand der Technik bekannt. DE 10 2007 016 027 A1 zeigt ein Beispiel in den Figuren 5 und 6 und beschreibt in den Absätzen [0052] - [0056] dieses Beispiel, auf das explizit Bezug genommen wird. WO 2017/178102 A1 zeigt ein weiteres Beispiel in den Fig. 4 bis 6, auf das ebenfalls explizit Bezug genommen wird. Anschließend, z.B. entlang der in Figur 1 sich vom entfernten Umlenkrad (34) bis hin zum Entnahmerad (35) erstreckenden Umlaufstrecke (20), könnte diese kontinuierliche Drehung beendet werden und z.B. der Vorformling (1) mit den Winkelbereichen (40) und (42) länger dem Heizstrahler (47) zugewandt an den Heizkästen (30) entlanggeführt werden. Denkbar ist z.B. auch, dass dieses "Preferential Heating" lediglich bei dem letzten Heizkasten (30) vor dem Entnahmerad (35) erfolgt oder bei den zwei oder drei letzten Heizkästen (30), während die übrigen Heizkästen (30) in der zuvor beschriebenen Weise für eine gleichmäßige Temperierung eingesetzt werden.

Fig. 4 zeigt einen Vorformling (1), nachdem dieser z.B. eine Heizvorrichtung (H) gemäß Fig. 1 durchlaufen und ein "Preferential Heating" erfahren hat, wie zu den Figuren 2 und 3 beschrieben. Der Vorformling (1) ist somit insgesamt auf eine Temperatur erwärmt, die höher ist als die Erweichungstemperatur des thermoplastischen Materials, aus dem der Vorformling besteht, sodass der Vorformling (1) insgesamt so temperaturkonditioniert ist, dass eine Umformung in einen Behälter (2) erfolgen kann. Umfangsbereiche (13), die z.B. den Winkelbereichen (40) und (42) aus Figur 3 entsprechen können, sollen z.B. auf eine noch höhere Temperatur erwärmt sein, als die Umfangsbereiche (14), die z.B. den Winkelbereichen (41) und (43) aus Figur 3 entsprechen können. Es versteht sich, dass die wärmeren Bereiche (13) und die weniger warmen Bereiche (14) keine scharfen Grenzen aufweisen, sondern dass es eine stetige Änderung der Temperatur zwischen den beiden Bereichen gibt, da es aufgrund der Wärmeleitfähigkeit des thermoplastischen Materials zu Temperaturausgleichsprozessen kommt.

Die wärmeren Umfangsbereiche (13) sind aufgrund ihrer höheren Temperatur leichter verformbar als die weniger warmen Umfangsbereiche (14), wenn in bekannter Weise ein Druckmedium, z.B. Blasgas, in den Vorformling (1) eingeleitet wird. Somit haben die relativ wärmeren Umfangsbereiche (13) im Verlauf dieser Verformung ein größeres Streckvermögen im Vergleich zu den relativ weniger warmen Umfangsbereichen (14).

Zu Figur 1 wurde erläutert, dass mehrere Trageinrichtungen (33) zu einer kettenartigen Anordnung miteinander verbunden sind. Ein Ausführungsbeispiel für solche Trageinrichtungen (33) zeigt die Figur 5 in zwei unterschiedlichen Ansichten.

Die dargestellte Trageinrichtung (33) weist zum Zwecke der Verbindung mit weiteren gleich aufgebauten Trageinrichtungen (33) Verbindungselemente (60) und (61) auf. Da die Art der Verbindung der Trageinrichtungen (33) zu einer umlaufenden Kette für die Erfindung nicht von Bedeutung ist, soll auf diese Elemente nicht weiter eingegangen werden. Die umlaufende Führung erfolgt dabei über die dargestellten beiden Führungsrollen (62) und (63), die mit stationären Führungskurven zusammenwirken, die in keiner der Figuren gezeigt, im Stand der Technik aber ohnehin bekannt sind, z.B. aus der WO 2017/178102 A1 und der dortigen Figur 5.

Für das Halten eines Vorformlings (1) weist die Trageinrichtung (33) im dargestellten Beispiel ein als Klemmdorn (55) ausgeführtes Haltemittel auf. Dieser Klemmdorn (55) ragt mit seinem Klemmkopf in das Innere des Mündungsbereichs (302) des Vorformlings (1) hinein und hält den Vorformling (1) dann aufgrund einer ausgeübten Klemmkraft. Entsprechende Klemmdorne sind im Stand der Technik bekannt. Zur Abschirmung des Mündungsbereichs (302) des Vorformlings (1) gegen Heizstrahlung weist die Trageinrichtung (33) eine Abschirmblende (65) auf. Zum Zwecke der Aufnahme eines Vorformlings und der Abgabe eines Vorformlings kann der Klemmdorn gegen die rückstellende Kraft einer Feder (66) nach unten gedrückt werden, bis der Mündungsbereich (302) unterhalb der Abschirmblende (65) angeordnet ist und z.B. von einer Zange am Handhabungsring (304) oder im Bereich des Handhabungsrings (304) ergriffen werden kann.

Der Klemmendorn (55) weist eine Längsachse auf, die in seiner Raumlage mit der Raumlage der Längsachse des Vorformlings (1) übereinstimmt. Weiterhin ist der Klemmdorn (55) drehbar in der Trageinrichtung (33) angeordnet bzw. gelagert, sodass er um seine Längsachse gedreht werden kann. Da die Drehachse des Vorformlings (1) und die Drehachse des Klemmdornes (55) im Raum deckungsgleich sind, führt das Drehen des Klemmdornes (55) um seine Längsachse zu einer Drehung des Vorformlings (1) um dessen Längsachse. Es ist generell und losgelöst von diesem konkreten Ausführungsbeispiel vorteilhaft, wenn Deckungsgleichheit im Raum bezüglich der Drehachse des Vorformlings (1) und der Drehachse der Trageinrichtung (33) besteht.

Zur Einbringung einer Drehkraft auf den Klemmdorn (55) weist dieser ein Zahnrad (68) auf, das während des Umlaufs der Trageinrichtung (33) in der Heizvorrichtung (H) an einer Gegenstruktur entlanggeführt wird, z.B. an einem Zahnriemen, wie im Stand der Technik bekannt. An seinem unteren Ende hält der Klemmdorn (55) den Vorformling (1), während der Klemmdorn (55) an seinem entgegengesetzten anderen Ende einen beabstandet zu seiner Längsachse an einem Hebelarm (71) angeordneten Führungsstift (70) aufweist, der mit einer Führungsnut zusammenwirkt, die z.B. nur im Bereich des Preferential Heating angeordnet ist und den Führungsstift nur in diesem Bereich führt und dadurch die Trageinrichtung drehfest hält, während dieser die Heizstrecke (24) entlangläuft. Auch dies ist grundsätzlich im Stand der Technik bekannt. Das drehfeste Halten kann aber auch anders realisiert sein. Ein aktives Halten ist nicht zwingend erforderlich, denn es wäre grundsätzlich auch ausreichend, im Bereich des Preferential Heating keine aktive Dorndrehung auszuführen, wodurch der Klemmdorn weitestgehend drehfest geführt wäre.

Figur 6a zeigt in einer schematischen Darstellung einen Heizkasten (41) als Beispiel für eine Heizeinrichtung (30). Dieser Heizkasten (41) begrenzt mit einem Seitenreflektor (44), der z.B. aus einer Reflektorkeramik bestehen kann, und einem gegenüberliegend und parallel verlaufenden Heizstrahlerelement (46) eine Heizgasse (48), die Teil der Heizstrecke (24) ist. Im Bodenbereich dieses Heizkastens (41) ist ein Bodenreflektor (43) angeordnet, um Strahlungsverluste und ein übermäßiges Aufheizen des Heizkastens (41) zu vermeiden. In aller Regel ist eine Kühlung der Reflektoren (44, 43) und des Heizstrahlerelements (46) vorgesehen. Zu diesem Zweck wird z.B. der Heizkasten (41) in nicht dargestellter Weise im Inneren von Kühlluft durchströmt. Der Heizkasten (41) könnte z.B. von einem Kühllüfter gekühlt werden, der gefilterte Umgebungsluft ansaugt und diese durch einen Luftkasten von unten gegen die Reflektorkeramik bläst. Eine eigene Steuerung könnte den Kühllüfter automatisch steuern, z.B. abhängig von der eingestellten Gesamtheizleistung des Heizkastens (41).

Ein Beispiel für ein Heizstrahlerelement (46) ist in Figur 6b dargestellt. Mehrere längserstreckte Röhrenstrahler (647) sind in vertikaler Richtung übereinanderliegend angeordnet, während die Längsachse der Röhrenstrahler (647) parallel zur Fördererrichtung der daran vorbei geführten Vorformlinge (1) ausgerichtet ist. Mit ihren beiden Enden ragen die Röhrenstrahler (647) in seitlich angeordnete Versorgungs- und Kühlschächte (618) und (621) hinein. Dort sind elektrische Steckkontakte angeordnet und zur Abführung von Wärme werden diese Schächte z.B. von kühler Luft durchströmt, die im Bereich von Leitblechen (622) und (633) in die Umgebung abgelassen wird. Bezugszeichen (646) deutet eine Versorgungsleitung an und Bezugszeichen (624) bezeichnet eine elektrische Steckverbindung, um das dargestellte Heizstrahlerelement (46) elektrisch mit einer Stromversorgung und gegebenenfalls mit einer Steuerung oder einer Regelung zu verbinden

Der in Figur 6a dargestellte Heizkasten (41) weist lediglich auf der einen Seite der Heizgasse (48) ein Heizstrahlerelement (46) auf. Möglich ist aber auch, dass unter Weglassung des Seitenreflektors (44) beidseitig der Heizgasse (48) Heizstrahlerelemente (46) angeordnet werden, z.B. um den Heizkasten (48) optimiert für ein Preferential Heating einzusetzen, bei dem Vorformlinge (1) entlang der Heizgasse (48) geführt werden, ohne dass diese Vorformlinge (1) um Ihre Längsachse gedreht werden. Bei nur einseitiger Anordnung eines Heizstrahlerelementes (46) ist der Heizkasten (41) besser geeignet für eine gleichmäßige Temperierung der Vorformlinge (1) in Umfangsrichtung, und zu diesem Zwecke würden Vorformlinge (1) entlang der Heizgasse (48) und dabei kontinuierlich um die Längsachse drehend geführt werden.

Der exemplarisch beschriebene Heizkasten (41) könnte an eine Heizungssteuerung angeschlossen sein, die z.B. die übereinander angeordneten Röhrenstrahler (47) auf eine unterschiedliche Heizleistung ansteuert, sodass sich ein Abstrahlungsprofil ausbildet und in den vorbeigeführten Vorformlingen (1) ein Heizprofil entsteht, weil unterschiedliche Bereiche des Vorformlings (1) mit einer unterschiedlichen Energiemenge behandelt werden. Dieses Heizprofil könnte z.B. einstellbar ausgeführt sein. Es könnte auch eine Regelung der Heizleistung der Röhrenstrahler erfolgen, z.B. anhand vom Messungen an den fertig temperierten Vorformlingen.

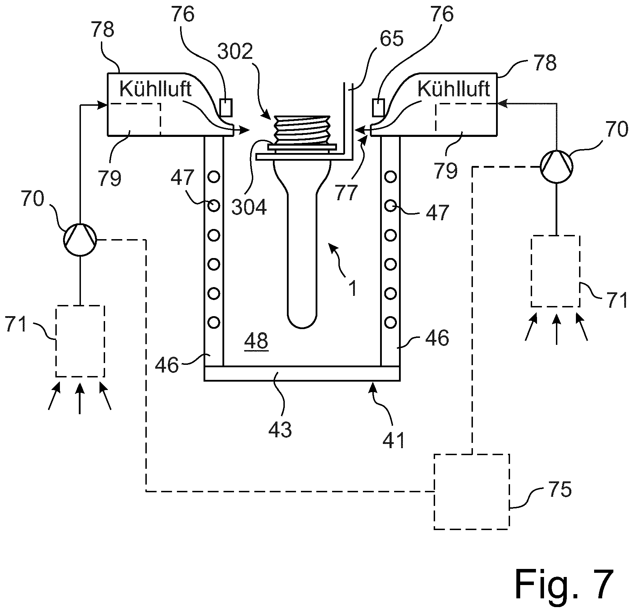

Figur 7 zeigt in einer schematischen Darstellung ein Beispiel für eine erfindungsgemäße Beaufschlagung des Mündungsbereichs (302) eines Vorformlings (1) aus entgegengesetzten Richtungen mit einem Kühlmedium, vorliegend mit Kühlluft. Dargestellt ist in einer Schnittansicht und rein beispielhaft ein Heizkasten (41), bei dem auf beiden Seiten der Heizgasse (48) Heizstrahlerelemente (46) angeordnet sind. Der Boden der Heizgasse (48) wird von einem Bodenreflektor (43) begrenzt. Über die Längserstreckung des Vorformlings (1) verteilt sind mehrere Röhrenstrahler (47) übereinander angeordnet. Mit Bezugszeichen (65) ist eine Abschirmblende gezeigt, die bis kurz unterhalb des Handhabungsringes (304) reicht, um den Mündungsbereich (302) gegen Heizstrahlung abzuschirmen. Der Vorformling (1) könnte im Übrigen von einer Transporteinrichtung (33) wie in Figur 5 gezeigt gehalten und geführt sein. Die Abschirmblende 65 könnte ebenfalls wie in Figur 5 gezeigt ausgebildet sein.

Der Mündungsbereich (302) wird gemäß der beispielhaften Darstellung der Figur 7 zu beiden Seiten mit Kühlluft angeblasen. Diese Kühlluft tritt aus düsenförmigen Öffnungen (77) eines Kühlluftkanales (78) aus, wobei diese Öffnungen (77) auf Höhe des Mündungsbereichs (302) angeordnet und auf den zu kühlenden Mündungsbereich (302) ausgerichtet sind. Die Ausströmrichtungen der zu beiden Seiten einwirkenden Kühlluft steht dabei einerseits im Wesentlichen senkrecht zur Förderrichtung der Vorformlinge (1) und verlaufen andererseits im Wesentlichen horizontal, generell bevorzugt leicht nach oben gerichtet, damit die Kühlluft möglichst nicht in die Heizgasse (48) hineinströmt und dadurch unter Umständen die Erwärmung der Vorformlinge (1) stört. Die Versorgung der beiden Kühlluftkanäle (78) mit Kühlluft erfolgt z.B. über Kühllüfter (70). Im dargestellten Ausführungsbeispiel wird jeder der beiden Kühlluftkanäle (78) von einem eigenen, zugeordneten Kühllüfter (70) versorgt. Denkbar ist auch, dass beide Kühlluftkanäle gemeinschaftlich von einem gemeinsamen Kühllüfter (70) versorgt werden, was aber als weniger vorteilhaft betrachtet wird. Der jeweilige Kühllüfter (70) saugt über einen Filter (71) Umgebungsluft ein.

Bevorzugt sind die Kühllüfter (70) an eine Steuerung (75) oder an eine Regelung (75) angeschlossen, die z.B. die Kühlleistung der Kühllüfter (70) steuern oder regeln kann. Da sowohl diese Steuerung (75) oder Regelung als auch das Ansaugen der Umgebungsluft über Filter (71) als optional anzusehen ist, sind diese Elemente gestrichelt dargestellt. Wenn eine Steuerung oder Regelung der Kühlleistung gewünscht ist, werden bevorzugt Sensoren (76) vorgesehen, die z.B. als Pyrometer ausgebildet sein können. Diese Sensoren (76) sind so angeordnet und ausgerichtet, dass sie eine Temperatur des Mündungsbereichs (302) des Vorformlings (1) erfassen können. Im dargestellten Beispiel sind beide Kühlluftkanäle (78) mit einem solchen Temperatursensor (76) ausgestattet, sodass die Temperatur des Mündungsbereichs (302) auf beiden, den Sensoren (76) zugewandten Seiten von jeweils einem zugeordneten Sensor (76) erfasst werden kann. Dieser Sensor (76) steht in Datenverbindung mit der Steuereinrichtung (75) und liefert die erfassten Temperaturwerte. Anhand dieser Temperaturwerte kann die Steuereinrichtung (75) z.B. die Leistung der Kühllüfter (70) verändern. Denkbar ist auch, dass die Steuereinrichtung (75) Temperiermittel (79) ansteuert, mit denen die Temperatur der Kühlluft eingestellt wird, die auf den Mündungsbereich (302) des Vorformlings (1) abgegeben wird.

Im dargestellten Ausführungsbeispiel der Figur 7 wird der Mündungsbereich (302) aus zwei Richtungen mit Kühlluft angeblasen. Es ist denkbar, dieses Anblasen auch aus mehr als zwei Richtungen vorzunehmen, wobei zwei Richtungen als ausreichend angesehen werden. In der gewählten zeichnerischen Darstellung liegen sich die beiden Kühlluftkanäle (78) gegenüber und der Mündungsbereich (302) wird zeitgleich aus zwei entgegengesetzten Richtungen angeblasen. Die Austrittsöffnungen (77) können dazu z.B. als Längsschlitze ausgeführt sein, wobei sich dieser Längsschlitz parallel zur Förderrichtung der Vorformlinge erstreckt. Denkbar ist auch, dass in Förderrichtung hintereinanderliegend abwechselnd der Vorformling (1) zunächst von der einen Seite und dann von der anderen Seite angeblasen wird, gegebenenfalls mehrfach alternierend. Dies kann Vorteile bei der Kühlluftführung haben, da die Kühlluftströme nicht aufeinander gerichtet werden müssen und es somit zu geringerer Verwirbelung und zu einem geringeren Eintrag von Kühlluft in die Heizgasse (48) kommt. Das gleichzeitige Beaufschlagen aus beiden Richtungen hat hingegen den Vorteil einer langen Einwirkzeit.

Die in Figur 7 dargestellte Anordnung sorgt dafür, dass der nicht drehende Vorformling (1) in seinem Mündungsbereich (302) zuverlässig gekühlt wird. Grundsätzlich könnte eine solche Anordnung auch bei Heizkästen (41) vorgesehen sein, bei denen z.B. nur auf einer Seite der Heizgasse (48) ein Heizstrahlerelement (46) vorgesehen ist und/oder bei dem der Vorformling (1) beim Durchlaufen der Heizgasse (48) kontinuierlich drehend geführt ist. Allerdings ist bei einem kontinuierlich drehenden Vorformling (1) nicht in gleicher Weise erforderlich, dass der Mündungsbereich (302) aus mehreren Richtungen angeblasen wird, denn aufgrund der Drehbewegung gelangt jeder Umfangsbereich der Mündung (302) irgendwann in den Einflussbereich der Kühlluft. Allerdings kann bei einem Anblasen aus mehreren Richtungen auch bei dieser kontinuierlichen Drehung die Kühlwirkung verbessert werden.

## Patentansprüche

1. Heizverfahren zur thermischen Konditionierung von Vorformlingen (1), bei dem die Vorformlinge in einer Förderrichtung durch eine Heizvorrichtung (H) geführt werden, wobei in der Heizvorrichtung (H) mehrere Heizeinrichtungen (30) entlang einer Heizstrecke (24) stationär und in der Förderrichtung hintereinanderliegend angeordnet werden, wobei die Vorformlinge (1) zur Erzeugung eines Temperaturprofils in Umfangsrichtung (preferential heating) während der Führung entlang der Heizstrecke (24) und damit entlang der Heizeinrichtungen (30) wenigstens zeitweise nicht um ihre eigene Längsachse gedreht, sondern drehfest geführt werden, wobei der Mündungsbereich (302) der Vorformlinge (1) während der Führung entlang der Heizstrecke (24) wenigstens zeitweise gerichtet mit einem Kühlmedium beaufschlagt wird, **dadurch gekennzeichnet, dass** wenigstens zeitweise während dieser drehfesten Führung der Mündungsbereich (302) aus zumindest zwei unterschiedlichen Richtungen mit dem Kühlmedium beaufschlagt wird.

2. Heizverfahren nach Anspruch 1, **dadurch gekennzeichnet, dass** ausschließlich während der drehfesten Führung die wenigstens zeitweise Beaufschlagung des Mündungsbereichs (302) aus zumindest zwei unterschiedlichen Richtungen mit dem Kühlmedium erfolgt und/oder wobei die zwei oder zwei der mehreren Richtungen winklig, insbesondere senkrecht zur Förderrichtung liegen.

3. Heizverfahren nach Anspruch 1 oder 2, **dadurch gekennzeichnet, dass** die Kühlleistung resultierend aus der Beaufschlagung mit dem Kühlmedium für wenigstens zwei Richtungen unterschiedlich einstellbar ausgeführt wird, bevorzugt unabhängig voneinander einstellbar ist.

4. Heizverfahren nach Anspruch 3, **dadurch gekennzeichnet, dass** die Kühlleistung gesteuert oder geregelt wird, bevorzugt in Abhängigkeit von wenigstens einer gemessenen Mündungstemperatur, weiter bevorzugt in Abhängigkeit von wenigstens zwei gemessenen Mündungstemperaturen, die umfangsverteilt am Mündungsbereich (302) erfasst werden.

5. Heizverfahren nach einem der vorhergehenden Ansprüche, **dadurch gekennzeichnet, dass** das Kühlmedium temperiert wird und/oder als Kühlmedium Luft verwendet wird, weiter bevorzugt Sterilluft.

6. Heizvorrichtung (H) für die thermische Konditionierung von Vorformlingen (1), durch die Vorformlinge (1) zum Zwecke ihrer Temperaturkonditionierung in einer Förderrichtung geführt werden, wobei in der Heizvorrichtung (H) mehrere Heizeinrichtungen (30) entlang einer Heizstrecke (24) stationär und in der Förderrichtung hintereinanderliegend angeordnet sind, wobei die Heizvorrichtung (H) mehrere Trageinrichtungen (33) für Vorformlinge (1) aufweist, die miteinander verbunden sind zur Ausbildung einer Endlostransportkette, wobei die Endlostransportkette antreibbar ist zu einem kontinuierlichen Umlauf innerhalb der Heizvorrichtung (H) in Förderrichtung entlang einer Umlaufstrecke (20), die die Heizstrecke (24) umfasst, wobei bei diesem Umlauf entlang der Heizstrecke (24) das Führen der Vorformlinge (1) entlang der Heizeinrichtungen (30) erfolgt, wobei jede Trageinrichtung (33) ein Haltemittel (55) für einen Vorformling (1) aufweist, das ausgebildet ist für das Halten des Vorformlings (1), und das drehbar in der Trageinrichtung (33) angeordnet ist für eine Drehung des gehaltenen Vorformlings (1) um dessen Längsachse, wobei die Heizvorrichtung (H) an den Haltemitteln (55) angreifende und deren Drehposition vorgebende Führungsmittel (70, 68) aufweist, wobei die Führungsmittel (70, 68) so angeordnet und ausgebildet sind, dass wenigstens auf einer Teilstrecke der Heizstrecke (24) die Haltemittel (55) zu einer gleichförmigen Drehung um ihre Längsachse geführt sind, sodass die Vorformlinge (1) in ihrer Umfangsrichtung gleichmäßig temperiert werden, und wobei auf einer anderen Teilstrecke der Heizstrecke (24) die Haltemittel (55) drehfest gehalten sind, sodass die Vorformlinge (1) in ihrer Umfangsrichtung ungleichmäßig temperiert werden (Preferential Heating), wobei die Heizvorrichtung (H) einen den Mündungsbereich (302) der Vorformlinge (1) während der Führung entlang der Heizstrecke (24) wenigstens zeitweise gerichtet mit einem Kühlmedium beaufschlagende Kühlvorrichtung (78) aufweist, **dadurch gekennzeichnet, dass** die Kühlvorrichtung (78) wenigstens zwei Kühleinrichtungen (77) aufweist, die jeweils gerichtet den Mündungsbereich (302) der Vorformlinge (1) aus einer Richtung mit dem Kühlmedium beaufschlagen, wobei die Richtungen der Kühleinrichtungen (77) verschieden sind, so dass der Mündungsbereich (302) aus unterschiedlichen Richtungen mit dem Kühlmedium beaufschlagbar ist, wobei die Kühleinrichtungen (77) wenigstens an der Teilstrecke der Heizstrecke (24) angeordnet sind, an der die Haltemittel (55) drehfest gehalten sind.

7. Heizvorrichtung (H) nach Anspruch 6, **dadurch gekennzeichnet, dass** die Richtungen, aus denen der Mündungsbereich (302) der Vorformlinge (1) mit dem Kühlmedium beaufschlagt wird, winklig, insbesondere senkrecht zur Förderrichtung ausgerichtet sind.

8. Heizvorrichtung (H) nach Anspruch 6 oder 7, **dadurch gekennzeichnet, dass** die Heizvorrichtung (H) eine Regel- oder eine Steuervorrichtung (75) aufweist, an die wenigstens eine der Kühleinrichtungen (77) angeschlossen ist, wobei die Kühleinrichtung (77) von der Regel- oder Steuervorrichtung (75) in ihrer Kühlleistung, welche aus der Beaufschlagung mit dem Kühlmedium resultiert, unabhängig von den anderen Kühleinrichtungen (77) in der Kühlleistung einstellbar ist.

9. Heizvorrichtung (H) nach Anspruch 8, **dadurch gekennzeichnet, dass** die Regel- oder Steuervorrichtung (75) eine Sensoreinrichtung (76) aufweist, die ausgebildet und angeordnet ist zur Erfassung wenigstens einer Mündungstemperatur, wobei die Regel- oder Steuervorrichtung (75) mit der Sensoreinrichtung (76) und der Kühleinrichtung (77) einen Steuer- oder einen Regelkreis ausbilden, mit dem die Kühlleistung einstellbar ist in Abhängigkeit von der Mündungstemperatur.

10. Heizvorrichtung (H) nach Anspruch 8, wobei alle der wenigstens zwei Kühleinrichtungen (77) an die Regel- oder Steuervorrichtung (75) angeschlossen sind, und jede der Kühleinrichtungen (77) in ihrer Kühlleistung einstellbar ist, wobei bevorzugt die Regel- und Steuervorrichtung (75) eine Sensoreinrichtung (76) aufweist mit mehreren Sensoren zur Erfassung mehrerer umfangsverteilter Mündungstemperaturen, wobei jeder Sensor eine der mehreren Temperaturen erfasst, wobei jede Kühleinrichtung (77) mit der Regel- oder Steuervorrichtung (75) und jeweils einem zugeordneten Sensor (76) einen Steuer- oder einen Regelkreis ausbildet, mit dem die jeweilige Kühlleistung einstellbar ist anhand der zugeordneten Mündungstemperatur.

11. Heizvorrichtung (H) nach einem der Ansprüche 6 bis 10, **dadurch gekennzeichnet, dass** die Kühleinrichtungen (77) als Kühllüfter ausgeführt sind, die bevorzugt Filter (71) für das Ansaugen von Sterilluft aufweisen.

12. Heizvorrichtung (H) nach einem der vorhergehenden Ansprüche 6-11, **dadurch gekennzeichnet, dass** die Kühleinrichtungen (77) das Kühlmedium temperierende Temperiermittel (79) aufweisen, wobei bevorzugt die Regel- oder Steuervorrichtung (75) nach einem der Ansprüchen 8 bis 11 ausgebildet ist, die Einstellung der Kühlleistung durch Ansteuerung der Temperiermittel (79) auszuführen.

13. Behälterherstellungsmaschine (B) für die Umformung von Vorformlingen (1) in Behälter, **gekennzeichnet durch** eine Heizvorrichtung (H) nach einem der Ansprüche 6 bis 12.

## Claims

1. A heating method for the thermal conditioning of preforms (1), wherein the preforms are guided through a heating apparatus (H) in one conveying direction, wherein, in the heating apparatus (H), a plurality of heating devices (30) are arranged in a stationary manner along a heating section (24) one behind the other in the conveying direction, wherein the preforms (1) are guided in a continuous manner in the circumferential direction (preferential heating) for the generation of a temperature profile while being guided along the heating section (24) and therefore, along the heating devices (30), they are at least periodically not rotated around their own longitudinal axis but are guided in a torque-proof manner, wherein a cooling medium is at least periodically applied in a directed manner to the orifice area (302) of the preforms (1) while being guided along the heating section (24), **characterized in that**, at least periodically during this torque-proof guidance, the cooling medium is applied to the orifice area (302) from at least two different directions.

2. The heating method according to Claim 1, **characterized in that**, only during the torque-proof guidance, the cooling medium is at least periodically applied to the orifice area (302) from at least two different directions and/or wherein the two directions, or two of the plurality of directions, are at an angle, in particular, perpendicular to the conveying direction.

3. The heating method according to Claim 1 or 2, **characterized in that** the cooling performance resulting from the application of the cooling medium is designed to be variably adjustable for at least two directions, preferably being adjustable independently of one another.

4. The heating method according to Claim 3, **characterized in that** the cooling performance is controlled or regulated, preferably depending on at least one measured orifice temperature, being furthermore preferred, depending on at least two measured orifice temperatures which are measured at the orifice area (302) at various points along its circumference.

5. The heating method according to any one of the preceding claims, **characterized in that** the cooling medium is tempered and/or air is used as the cooling medium, being furthermore preferred, sterile air.

6. Heating apparatus (H) for the thermal conditioning of preforms (1), via which, preforms (1) are guided in a conveying direction for the purpose of their temperature conditioning, wherein, in the heating apparatus (H), a plurality of heating devices (30) are arranged along a heating section (24) in a stationary manner in the conveying direction one behind the other, wherein the heating apparatus (H) comprises a plurality of support devices (33) for preforms (1) which are connected to each other for the purpose of forming an endless transport chain, wherein the endless transport chain can be driven to a continuous circulation within the heating apparatus (H) in the conveying direction along a circulation section (20), which comprises the heating section (24), wherein, in the case of this circulation along the heating section (24), the preforms (1) are guided along the heating devices (30), wherein each support device (33) comprises a retaining means (55) for a preform (1), which is designed for holding the preform (1), and which is arranged in a rotatable manner in the support device (33) for a rotation of the held preform (1) around its longitudinal axis, wherein the heating apparatus (H) comprises guide means (70, 68) acting on the retaining means (55) and determining their rotational position, wherein the guide means (70, 68) are arranged and designed in such a way that, at least on a section of the heating section (24), the retaining means (55) are guided to perform a uniform rotation around their longitudinal axis so that the preforms (1) are evenly tempered in their circumferential direction, and wherein, on another section of the heating section (24), the retaining means (55) are held in a torque-proof manner so that the preforms (1) are unevenly tempered in their circumferential direction (preferential heating), wherein the heating apparatus (H) comprises a cooling apparatus (78), which at least periodically applies cooling medium in a directed manner to the orifice area (302) of the preforms (1) while being guided along the heating section (24) **characterized in that** the cooling apparatus (78) comprises at least two cooling devices (77), each of which apply cooling medium to the orifice area (302) of the preforms (1) from one direction in a directed manner, wherein the directions of the cooling devices (77) are variable so that cooling medium can be applied to the orifice area (302) from different directions, wherein the cooling devices (77) are arranged at least on the section of the heating section (24) on which the retaining means (55) are held in a torque-proof manner.

7. The heating apparatus (H) according to Claim 6, **characterized in that** the directions from which the cooling medium is applied to the orifice area (302) of the preforms (1) are at an angle, in particular, perpendicular to the conveying direction.

8. The heating apparatus (H) according to Claim 6 or 7, **characterized in that** the heating apparatus (H) comprises a regulation or control apparatus (75) to which at least one of the cooling devices (77) is connected, wherein the cooling device (77) of the regulation or control apparatus (75) is adjustable in its cooling performance independently of the other cooling devices (77), which cooling performance results from the application of the cooling medium.

9. Heating apparatus (H) according to Claim 8, **characterized in that** the regulation or control apparatus (75) comprises a sensor device (76) which is designed and arranged for detecting at least one orifice temperature, wherein the regulation or control apparatus (75) with the sensor device (76) and the cooling device (77) form a regulation or a control loop by means of which the cooling performance can be adjusted as a function of the orifice temperature.

10. The heating apparatus (H) according to Claim 8, wherein all of the at least two cooling devices (77) are connected to the regulation or control apparatus (75), and each of the cooling devices (77) is adjustable in its cooling performance, wherein, preferably, the regulation and control apparatus (75) comprises a sensor device (76) with a plurality of sensors for sensing a plurality of orifice temperatures at various points along its circumference, wherein each sensor detects one of the a plurality of temperatures, wherein each cooling device (77) with the regulation or control apparatus (75) and a respectively assigned sensor (76) form a regulation or control loop, by means of which the respective cooling performance is adjustable on the basis of the assigned orifice temperature.

11. The heating apparatus (H) according to any one of the Claims 6 to 10, **characterized in that** the cooling devices (77) are designed as cooling fans which preferably comprise filters (71) for sucking in sterile air.

12. The heating apparatus (H) according to any one of the preceding Claims 6-11, **characterized in that** the cooling devices (77) comprise temperature-control means (79) that tempers the cooling medium, wherein the regulation or control apparatus (75) according to any one of the Claims 8 to 11 is preferably designed to adjust the cooling performance by controlling the temperature-control means (79).

13. A container manufacturing machine (B) for the forming of preforms (1) into containers, **characterized by** a heating apparatus (H) according to any one of Claims 6 to 12.

## Revendications

1. Procédé de chauffage pour le conditionnement thermique de préformes (1) dans le cadre duquel les préformes sont conduites pour traverser un dispositif de chauffage selon une direction de transport, plusieurs unités de chauffage (30) stationnaires étant agencées dans le dispositif de chauffage (H) l'une derrière l'autre le long d'une section de chauffage (24) dans la direction de transport, les préformes (1) étant, temporairement au moins pendant le transport le long de la section de chauffage (24) et donc le long des unités de chauffage (30), transportées sans rotation autour de leur propre axe longitudinal pour l'obtention d'un profil de températures en sens périphérique (preferential heating), la section d'embouchure (302) des préformes (1) étant, temporairement au moins pendant le transport le long de la section de chauffage (24), exposée de façon ciblée à un agent de refroidissement, **caractérisé en ce que** la section d'embouchure (302) est, temporairement au moins pendant ce transport sans rotation, exposée à l'agent de refroidissement en provenance d'au moins deux directions différentes.

2. Procédé de chauffage selon la revendication 1, **caractérisé en ce que** l'exposition au moins temporaire de la section d'embouchure (302) à l'agent de refroidissement en provenance d'au moins deux directions différentes a exclusivement lieu pendant le transport sans rotation et/ou **en ce que** les deux ou au moins deux des directions forment un certain angle, notamment perpendiculaire, par rapport à la direction de transport.

3. Procédé de chauffage selon la revendication 1 ou 2, **caractérisé en ce que** la puissance de refroidissement résultant de l'action de l'agent de refroidissement selon au moins deux directions peut être réglée différemment et, de préférence, indépendamment pour chaque direction.

4. Procédé de chauffage selon la revendication 3, **caractérisé en ce que** la puissance de refroidissement est commandée ou réglée, de préférence en fonction d'au moins une température de l'embouchure mesurée, en outre de préférence en fonction d'au moins deux températures de l'embouchure mesurées à la périphérie de la section d'embouchure (302)

5. Procédé de chauffage selon l'une des revendications précédentes, **caractérisé en ce que** l'agent de refroidissement est tempéré ou **en ce que** l'on utilise de l'air comme agent de refroidissement, de préférence de l'air stérile.

6. Dispositif de chauffage (H) pour le conditionnement thermique de préformes (1) par lequel des préformes (1) sont conduites selon une direction de transport en vue de leur conditionnement thermique, plusieurs unités de chauffage (30) stationnaires étant agencées dans le dispositif de chauffage (H) l'une derrière l'autre le long d'une section de chauffage (24) dans la direction de transport, le dispositif de chauffage (H) présentant plusieurs dispositifs de support (33) des préformes (1), lesquels dispositifs sont reliés entre eux pour former une chaîne de transport sans
fin, la chaîne de transport sans fin pouvant être entraînée en circulation continue à l'intérieur du dispositif de chauffage (H) selon une direction de transport le long d'un circuit (20) qui comprend la section de chauffage (24), les préformes (1) étant conduites le long des unités de chauffage (30) pendant cette circulation le long de la section de chauffage (24), chaque dispositif de support (33) présentant respectivement un moyen de maintien (55) pour une préforme (1) conçu pour maintenir la préforme (1) et agencé dans le dispositif de support (33) de façon à pouvoir tourner pour obtenir une rotation de la préforme (1) maintenue autour de son axe longitudinal, le dispositif de chauffage (H) présentant des moyens de guidage (70, 68) associés aux moyens de maintien (55) dont ils définissent la position de rotation, les moyens de guidage (70, 68) étant agencés et conformés de façon à ce que les moyens de maintien (55) sont conduits sur au moins un tronçon de la section de chauffage (24) de façon à obtenir une rotation uniforme autour de leur axe longitudinal de sorte que les préformes (1) soient uniformément tempérées sur leur périphérie, les moyens de maintien (55) étant maintenus sans rotation sur un autre tronçon de la section de chauffage (24) de sorte que les préformes (1) soient non uniformément tempérées sur leur périphérie (Preferential Heating), le dispositif de chauffage (H) présentant un dispositif de refroidissement (78) soumettant de façon ciblée et temporairement au moins pendant le transport le long de la section de chauffage (24) la section d'embouchure (302) des préformes (1) à un agent de refroidissement, **caractérisé en ce que** le dispositif de refroidissement (78) présente au moins deux unités de refroidissement (77) qui soumettent respectivement de façon ciblée selon une certaine direction la section d'embouchure (302) des préformes (1) à un agent de refroidissement, les unités de refroidissement (77) agissant selon des directions différentes de façon à ce que la section d'embouchure (302) puisse être exposée à l'agent de refroidissement en provenance de directions différentes, les unités de refroidissement (77) étant au moins agencés sur le tronçon de la section de chauffage (24) sur lequel les moyens de maintien (55) sont maintenus sans rotation.

7. Dispositif de chauffage (H) selon la revendication 6, **caractérisé en ce que** les directions selon lesquelles l'agent de refroidissement agit sur la section d'embouchure (302) des préformes (1) forment un certain angle, notamment perpendiculaire, par rapport à la direction de transport.

8. Dispositif de chauffage (H) selon la revendication 6 ou 7, **caractérisé en ce que** le dispositif de chauffage (H) présente dispositif de régulation ou de commande (75) sur lequel est branchée l'une au moins des unités de refroidissement (77), la puissance de refroidissement de l'unité de refroidissement (77) résultant de l'action de l'agent de refroidissement étant réglable par le dispositif de régulation ou de commande (75) indépendamment de la puissance de refroidissement des autres unités de refroidissement (77).

9. Dispositif de chauffage (H) selon la revendication 8, **caractérisé en ce que** le dispositif de régulation ou de commande (75) présente un dispositif détecteur (76) conçu et agencé pour saisir au moins une température de l'embouchure, le dispositif de régulation ou de commande (75) formant avec le dispositif détecteur (76) et l'unité de refroidissement (77) un circuit de commande ou une boucle d'asservissement permettant de régler la puissance de refroidissement en fonction de la température de l'embouchure.

10. Dispositif de chauffage (H) selon la revendication 8, toutes les unités de refroidissement (77) du dispositif qui en compte au moins deux étant branchées sur le dispositif de régulation ou de commande (75) et la puissance de refroidissement de chacune des unités de refroidissement (77) étant réglable, le dispositif de régulation et de commande (75) présentant de préférence un dispositif détecteur (76) doté de plusieurs capteurs pour saisir plusieurs températures périphériques de la section d'embouchure, chaque capteur détectant l'une des températures, chaque unité de refroidissement (77) formant avec le dispositif de régulation ou de commande (75) et respectivement un capteur (76) qui lui est affecté un circuit de commande ou une boucle d'asservissement permettant de régler la puissance de refroidissement respective en fonction de la température correspondante de l'embouchure.

11. Dispositif de chauffage (H) selon l'une des revendications 6 à 10, **caractérisé en ce que** les unités de refroidissement (77) sont réalisées sous forme de ventilateurs de refroidissement présentant de préférence des filtres (71) pour l'aspiration d'air stérile.

12. Dispositif de chauffage (H) selon l'une des revendications précédentes 6 - 11, **caractérisé en ce que** les unités de refroidissement (77) présentent des moyens d'équilibrage de la température (79) pour tempérer l'agent de refroidissement, le dispositif de régulation ou de commande (75) étant de préférence réalisé selon l'une des revendications 8 à 11 pour régler la puissance de refroidissement en commandant les moyens d'équilibrage de la température (79).

13. Machine à fabriquer des récipients (B) pour la transformation de préformes (1) en récipient, **caractérisée par** un dispositif de chauffage (H) selon l'une des revendications 6 à 12.
